(19) Europäisches Patentamt
European Patent Office
Office européen des brevets

(11) EP 4 773 394 A1

(12) **EUROPEAN PATENT APPLICATION**
published in accordance with Art. 153(4) EPC

(43) Date of publication:
**08.07.2026 Bulletin 2026/28**

(21) Application number: **24908208.2**

(22) Date of filing: **20.12.2024**

(51) International Patent Classification (IPC):
***H01M 50/451*** (2021.01) ***H01M 50/457*** (2021.01)
***H01M 50/434*** (2021.01) ***H01M 50/414*** (2021.01)
***H01M 50/403*** (2021.01) ***H01M 10/052*** (2010.01)
***H01M 4/583*** (2010.01) ***H01M 4/38*** (2006.01)
***H01M 4/48*** (2010.01)

(52) Cooperative Patent Classification (CPC):
**H01M 4/38; H01M 4/48; H01M 4/583; H01M 10/052; H01M 50/403; H01M 50/414; H01M 50/434; H01M 50/451; H01M 50/457;**
Y02E 60/10

(86) International application number:
**PCT/KR2024/020909**

(87) International publication number:
**WO 2025/135926 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187739**

(71) Applicants:
- **LG Energy Solution, Ltd.**
  **Seoul 07335 (KR)**
- **Seoul National University R&DB Foundation**
  **Seoul 08826 (KR)**

(72) Inventors:
- **KANG, Tae Hong**
  **Daejeon 34122 (KR)**
- **KIM, Youn Sang**
  **Suwon-si Gyeonggi-do 16532 (KR)**
- **KIM, Jin Soo**
  **Daejeon 34122 (KR)**
- **CHO, Suk Man**
  **Daejeon 34122 (KR)**
- **PYO, Seon Mi**
  **Suwon-si Gyeonggi-do 16507 (KR)**
- **MIN, Byeong Yun**
  **Seoul 08799 (KR)**
- **YOO, An Seung**
  **Daejeon 34122 (KR)**
- **CHO, Jin Il**
  **Suwon-si Gyeonggi-do 16229 (KR)**
- **YUN, Hee Jun**
  **Suwon-si Gyeonggi-do 16229 (KR)**
- **KIM, Hee Bae**
  **Seongnam-si Gyeonggi-do 13567 (KR)**
- **LEE, Jee Won**
  **Suwon-si Gyeonggi-do 16550 (KR)**
- **JIN, Hu Ding**
  **Bucheon-si Gyeonggi-do 14565 (KR)**

(74) Representative: **Hoffmann Eitle**
**Patent- und Rechtsanwälte PartmbB**
**Arabellastraße 30**
**81925 München (DE)**

# (54) SEPARATOR FOR SECONDARY BATTERY AND METHOD FOR MANUFACTURING SAME

(57) The present invention relates to: a separator comprising a porous substrate, a ceramic coating layer provided on at least one of respective surfaces of the porous substrate, and a positively charged self-assembled monolayer provided on the ceramic coating layer; a method for manufacturing the separator; and a secondary battery comprising the separator.

EP 4 773 394 A1

[FIG. 1]

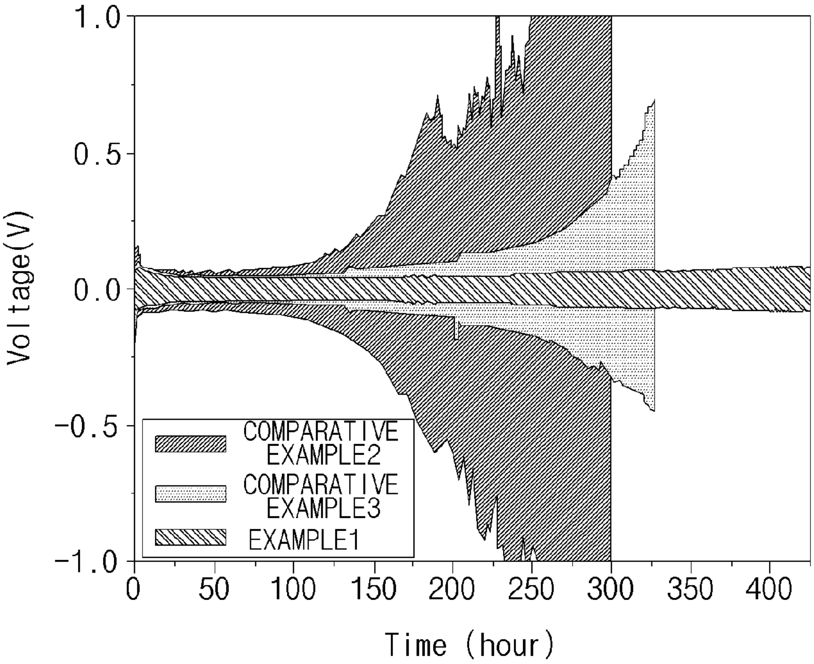
1.0
0.5
0.0
-0.5
-1.0
Voltage(V)
0
50
100
150
200
250
300
350
400
Time (hour)
COMPARATIVE EXAMPLE2
COMPARATIVE EXAMPLE3
EXAMPLE1

## Description

### TECHNICAL FIELD

The present invention relates to a separator for a secondary battery which includes a self-assembled monolayer, a method of preparing the same, and a secondary battery including the separator.

### BACKGROUND ART

There is a need to develop technology for efficiently storing and utilizing electrical energy as personal IT devices and computer networks are developed with the development of information society and the accompanying dependency of society as a whole on the electrical energy is increased.

Among the technologies developed for this purpose, a technology based on secondary batteries is the most suitable technology for various applications, and types of the secondary batteries currently widely used include a lithium secondary battery, a nickel-cadmium battery, a nickel-hydrogen battery, and a nickel-zinc battery. Among them, the lithium secondary battery theoretically having the highest energy density is attracting attention as a power source not only for small electronic devices such as mobile phones and notebook computers, but also for electric vehicles or energy storage systems.

The lithium secondary battery mainly uses a graphite-based material as a negative electrode material, wherein since a theoretical capacity limit has already been almost utilized, the negative electrode material becomes a major limitation in achieving a lithium secondary battery with higher energy density. Thus, there have been numerous attempts to utilize lithium metal having 10 times or more higher capacity per mass as a negative electrode.

However, the lithium metal electrode has a problem in that lithium ions generate lithium dendrites and dead lithium while being dissolved and unevenly deposited on a surface of the lithium metal during repeated charge and discharge processes. Since the grown dendrites may not only cause an internal short circuit, but also increase a contact area with an electrolyte solution to cause repeated formation of a solid electrolyte interphase (SEI), it may lead to depletion of the electrolyte solution and lithium. Also, the lithium metal is extracted during a process of lithium dissolution to generate electrically short-circuited dead lithium, wherein if this process is repeated, reaction products with the electrolyte solution may accumulate on the surface of the lithium to cause an increase in resistance.

Research has been actively conducted to solve this problem, and a representative example is a method of adding an additive to the electrolyte solution to form a reinforced SEI at an interface between an electrolyte and the negative electrode. However, this method may reduce uniformity of the SEI, and, in a case in which an amount of the additive added is not properly controlled, there is a risk that the additive may cause a side reaction to degrade performance.

Another method is to introduce a protective layer onto the surface of the lithium metal, wherein, in a case in which a slurry is directly applied onto the surface of the lithium metal in a process of forming the protective layer, there is a problem in that an organic solvent contained in the slurry reacts with the lithium metal to reduce stability. Even if an aprotic solvent, which does not react with the lithium metal, is used as the slurry solvent, there is a limitation in that the stability of the lithium metal may not be fully guaranteed due to remaining moisture.

Thus, there is a need to develop a method that may overcome this limitation.

### DISCLOSURE OF THE INVENTION

### TECHNICAL PROBLEM

An aspect of the present invention provides a separator that may contribute to formation of a stable solid electrolyte interphase (SEI) without adding a separate additive to an electrolyte solution or pretreating an electrode by including a positively charged self-assembled monolayer, a method of preparing the same, and a secondary battery with improved cycle characteristics by including the separator.

### TECHNICAL SOLUTION

[1] The present invention provides a separator for a secondary battery which includes: a porous substrate; a ceramic coating layer disposed on at least one surface of both surfaces of the porous substrate; and a positively charged self-assembled monolayer disposed on the ceramic coating layer.

[2] The present invention provides the separator for a secondary battery of [1] above, wherein a peak is observed at $531.8 \pm 1.0$ eV when an O 1s orbital of the self-assembled monolayer is analyzed by X-ray photoelectron spectroscopy.

[3] The present invention provides the separator for a secondary battery of [1] or [2] above, wherein a peak is observed at 402.6±1.0 eV when an N 1s orbital of the self-assembled monolayer is analyzed by X-ray photoelectron spectroscopy.

[4] The present invention provides the separator for a secondary battery of at least one of [1] to [3] above, wherein the self-assembled monolayer includes a structure derived from a trialkoxysilyl ammonium salt or an aminoalkyl trialkoxysilane.

[5] The present invention provides the separator for a secondary battery of at least one of [1] to [4] above, wherein the self-assembled monolayer includes a compound represented by Formula 1.

[Formula 1]

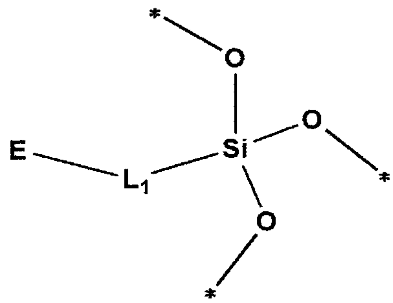

In Formula 1,

* is a portion that is bonded to the compound represented by Formula 1 in the self-assembled monolayer or is bonded to the ceramic coating layer,
E is $-NR_1R_2R_3^+$ or $-NH_2$,
wherein $R_1$ to $R_3$ are each independently hydrogen or an alkyl group, and
$L_1$ is an alkylene group.

[6] The present invention provides the separator for a secondary battery of at least one of [1] to [5] above, wherein a Li-ion transference number ($t_{Li+}$) according to Equation 1, which is measured by a method in which a voltage is applied to a lithium symmetrical cell including the separator between two lithium metal electrodes to induce polarization, and a current is stabilized until the current reaches a steady state, is 0.5 or more.

[Equation 1]

$$t_{Li+} = \frac{I_{SS}(\Delta V - I_0 R_0)}{I_0(\Delta V - I_{SS} R_{SS})}$$

In Equation 1,

$I_0$ is a current value (unit: A) in an initial state before polarization induction,
$I_{ss}$ is a current value (unit: A) in the steady state,
$R_0$ is an interface resistance value (unit: Q) in the initial state before polarization induction, and
$R_{ss}$ is an interface resistance value (unit: Q) in the steady state.
$\Delta V$ is a voltage value (unit: V) applied to the cell.

[7] The present invention provides the separator for a secondary battery of at least one of [1] to [6] above, wherein the ceramic coating layer includes at least one ceramic selected from the group consisting of aluminum oxide ($Al_2O_3$). boehmite, cerium oxide ($CeO_2$), calcium carbonate ($CaCO_3$), barium carbonate ($BaCO_3$), magnesium oxide (MgO), magnesium hydroxide ($Mg(OH)_2$), aluminum hydroxide ($Al(OH)_3$), clay, silica ($SiO_2$), zirconia ($ZrO_2$), titanium dioxide ($TiO_2$), and zinc oxide (ZnO).

[8] The present invention provides a method of preparing a separator for a secondary battery which includes: a first step of preparing a separator substrate including a ceramic coating layer on at least one surface of both surfaces of a

porous substrate; and a second step of forming a self-assembled monolayer by impregnating a surface of the ceramic coating layer with a solution for forming a monolayer which contains a trialkoxysilyl ammonium salt, an aminoalkyl trialkoxysilane, or a combination thereof.

[9] The present invention provides the method of preparing a separator for a secondary battery of [8] above, wherein the trialkoxysilyl ammonium salt is represented by Formula 2.

[Formula 2]

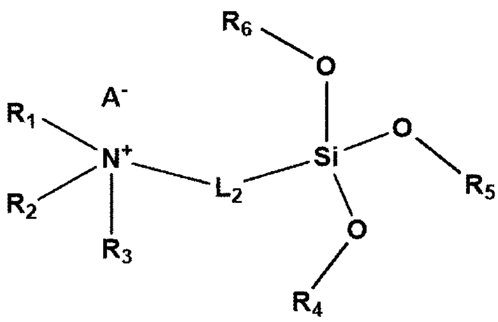

In Formula 2,

$R_1$ to $R_6$ are each independently hydrogen or an alkyl group,
$L_2$ is an alkylene group, and
$A^-$ is a monovalent anion.

[10] The present invention provides the method of [8] or [9] above, wherein the aminoalkyl trialkoxysilane is represented by Formula 3.

[Formula 3]

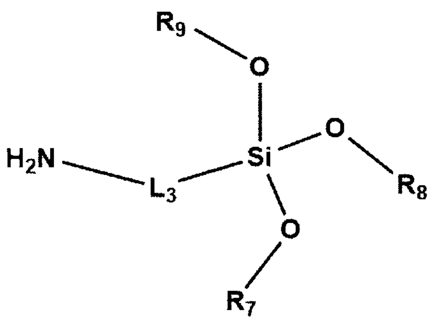

In Formula 3,

$R_7$ to $R_9$ are each independently an alkyl group, and
$L_3$ is an alkylene group.

[11] The present invention provides the method of at least one of [8] to [10] above, wherein a solvent of the solution for forming a monolayer is alcohol, water, or a combination thereof.

[12] The present invention provides the method of at least one of [8] to [11] above, wherein an amount of the trialkoxysilyl ammonium salt or the aminoalkyl trialkoxysilane is in a range of 0.1 vol% to 1.0 vol% based on a total volume of the solution for forming a monolayer.

[13] The present invention provides the method of at least one of [8] to [12] above, wherein the impregnating of the second step is performed for 12 hours to 48 hours.

[14] The present invention provides a secondary battery including a positive electrode; a negative electrode; the separator of at least one of [1] to [7] above which is disposed between the positive electrode and the negative electrode; and an electrolyte.

[15] The present invention provides the secondary battery of [14] above, wherein the negative electrode is lithium metal, or includes natural graphite, artificial graphite, $SiO_x$ ($0 \le x < 2$), or a mixture thereof as a negative electrode active material.

## ADVANTAGEOUS EFFECTS

Since a separator for a secondary battery according to the present invention includes a positively charged self-assembled monolayer, it may create an environment with a high concentration of anions, such as $PF_6^-$, in a lithium salt at an interface in contact with an electrolyte, and accordingly, it may contribute to formation of a LiF-rich solid electrolyte interphase (SEI) layer on a negative electrode.
That is, in a case in which the above separator is used, problems of generation of lithium dendrites and dead lithium caused by degradation of the negative electrode and resulting increase in resistance and decrease in durability of the secondary battery may be solved without a separate process of adding an electrolyte additive or pretreating the electrode.
Ultimately, a secondary battery including the separator has an effect of improving cycle characteristics.

## BRIEF DESCRIPTION OF THE DRAWINGS

FIG. 1 is a view illustrating a change in cell voltage over time of lithium symmetric cells in which separators prepared in Example 1 and Comparative Example 2 are used.
FIG. 2 is a view illustrating a change in cell voltage over time of the lithium symmetric cells in which the separators prepared in Example 1 and Comparative Example 2 are used.
FIG. 3 is a view illustrating results of X-ray photoelectron spectroscopy (XPS) analysis of a surface of the separator prepared in Example 1.
FIG. 4 is a view illustrating results of XPS analysis of a surface of the separator prepared in Comparative Example 2.
FIG. 5 is a view illustrating results of XPS analysis of a surface of a separator prepared in Comparative Example 3.
FIG. 6 is a view illustrating results of water contact angle measurement on the surface of the separator prepared in Example 1.
FIG. 7 is a view illustrating results of water contact angle measurement on the surface of the separator prepared in Comparative Example 2.
FIG. 8 is a view illustrating results of water contact angle measurement on the surface of the separator prepared in Comparative Example 3.
FIG. 9 is a view illustrating results of XPS analysis of an SEI layer of lithium metal recovered from the lithium symmetric cell in which the separator prepared in Example 1 is used.
FIG. 10 is a view illustrating results of XPS analysis of an SEI layer of lithium metal recovered from the lithium symmetric cell in which the separator prepared in Comparative Example 2 is used.
FIG. 11 is a view illustrating results of XPS analysis of an SEI layer of lithium metal recovered from a lithium symmetric cell in which the separator prepared in Comparative Example 3 is used.

## MODE FOR CARRYING OUT THE INVENTION

Hereinafter, the present invention will be described in more detail.
"X-ray Photoelectron Spectroscopy (XPS)" in the present invention was performed by an Axis Supra X-ray photoelectron spectrometer (Kratos Analytical Ltd) using a monochromatic Al-K$\alpha$ source in an ultra-high vacuum of less than $5.0 \times 10^{-10}$ Torr.
Demand for high-capacity batteries is increasing as the electric vehicle market grows rapidly, and in response to this, a lithium metal negative electrode is attracting attention as a negative electrode with high energy density. Lithium metal is suitable for achieving a secondary battery with high energy density because it exhibits much higher theoretical capacity and lower operating voltage than graphite that is currently the most commercialized negative electrode material, but there is a problem in that dendrites easily grow on a surface of the lithium metal when charge and discharge are repeated as described above. Since these dendrites not only cause damage to a separator, but also rapidly increase reactivity between the lithium metal and an electrolyte solution to become a factor in the generation of a polymer layer with no electrical conductivity, this may lead to degradation of battery performance.
To overcome this problem, the present inventors have introduced a positively charged self-assembled monolayer into the separator, and thus have found that it may compensate for the limitations of the lithium metal negative electrode by forming a LiF-rich solid electrolyte interphase (SEI) layer on the negative electrode.

Hereinafter, each component constituting the present invention will be described in more detail.

## Separator and Method of Preparing the Same

Specifically, a separator according to an embodiment of the present invention includes: a porous substrate; a ceramic coating layer disposed on at least one surface of both surfaces of the porous substrate; and a positively charged self-assembled monolayer disposed on the ceramic coating layer.

Since the self-assembled monolayer has a strong positive charge, it may trap anions of a lithium salt in an electrolyte by electrostatic attraction. When taking $LiPF_6$, the most widely used lithium salt, as an example, as an environment similar to a high-concentration electrolyte is created at an interface while $PF_6^-$ is distributed around the self-assembled monolayer by electrostatic attraction and a lowest unoccupied molecular orbital (LUMO) level of the lithium salt in the electrolyte is decreased, formation of an SEI layer occurs by a decomposition reaction ($PF_6^- \rightarrow PF_5 + F^-$) of the lithium salt anion rather than a decomposition reaction of an organic solvent. That is, a LiF-rich SEI is formed on a negative electrode, and since LiF exhibits chemically stable characteristics in comparison to other SEI components, the SEI layer may maintain a stable structure even during repeated charge and discharge processes. Thus, since the LiF-rich SEI layer may not only physically inhibit dendrites from growing through the SEI layer, but it may also prevent an isolation phenomenon of lithium by inhibiting the growth of the dendrites, it has an effect of suppressing generation of dead lithium.

Since this is an effect due to the electrostatic attraction between the positively charged self-assembled monolayer and the lithium salt anions, the present invention has a great advantage in that it may be applied regardless of a type of the lithium salt.

In order to prepare the separator,

a first step of preparing a separator substrate including a ceramic coating layer on at least one surface of both surfaces of a porous substrate; and

a second step of forming a self-assembled monolayer by impregnating a surface of the ceramic coating layer with a solution containing a trialkoxysilyl ammonium salt, an aminoalkyl trialkoxysilane, or a combination thereof must be performed.

Specifically, in the second step, the trialkoxysilyl ammonium salt or the aminoalkyl trialkoxysilane may be bonded to the ceramic coating layer by an alkoxy group included in its structure, and more specifically, the alkoxy group and the surface of the ceramic coating layer may undergo a dehydration-condensation reaction to form a self-assembled monolayer. For example, in a case in which the ceramic coating layer includes boehmite or alumina, water molecules ($H_2O$) are adsorbed on the surface of the ceramic coating layer due to polarity of -OH or -O functional groups. As a result, the trialkoxysilyl ammonium salt or the aminoalkyl trialkoxysilane undergoes a hydrolysis reaction to form -OH at a terminal thereof, and it may undergo a dehydration-condensation reaction with nearby -OH or -O to form a self-assembled monolayer.

Hereinafter, each component of the separator and the first step and the second step will be described in more detail.

### (a) Ceramic Coating Layer (First Step)

First, a separator substrate including a ceramic coating layer on at least one surface of both surfaces of a porous substrate is prepared.

The separator substrate may be used by purchasing a commercially available product, or may be prepared by a method of coating at least one surface of both surfaces of the porous substrate with a ceramic-containing slurry.

The porous substrate may be a polyolefin-based porous polymer substrate. The polyolefin-based porous polymer substrate may be a substrate including one or more polymers selected from the group consisting of polyethylene, polypropylene, ethylene vinyl acetate, ethylene butylacrylate, and ethylene ethyl acrylate, or a copolymer thereof, and may preferably include polyethylene. Specifically, the porous substrate may have a thickness of 5 $\mu$m to 20 $\mu$m, preferably, 5 $\mu$m to 15 $\mu$m.

The ceramic coating layer may include at least one ceramic selected from the group consisting of aluminum oxide ($Al_2O_3$), boehmite, cerium oxide ($CeO_2$), calcium carbonate ($CaCO_3$), barium carbonate ($BaCO_3$), magnesium oxide (MgO), magnesium hydroxide ($Mg(OH)_2$), aluminum hydroxide ($Al(OH)_3$), clay, silica ($SiO_2$), zirconia ($ZrO_2$), titanium dioxide ($TiO_2$), and zinc oxide (ZnO), may specifically include aluminum oxide ($Al_2O_3$) or boehmite, and may more specifically include boehmite. In a case in which the ceramic coating layer includes boehmite, it is desirable in that it is rich in a -OH functional group that may be bonded to molecules constituting the self-assembled monolayer, for example, a structure derived from the trialkoxysilyl ammonium salt or the aminoalkyl trialkoxysilane.

The ceramic-containing slurry may include a binder together with the ceramic, and may specifically include a

polyvinylidene fluoride (PVDF)-based binder.

An amount of the ceramic based on a total weight of the ceramic coating layer, that is, an amount of the ceramic based on a total weight of a solid content in the ceramic-containing slurry may be in a range of 50 wt% to 90 wt%, specifically, 60 wt% to 90 wt%. Heat resistance, durability, and stability of the separator may be simultaneously improved by controlling the amount of the ceramic within the above-described range.

An amount of the binder based on the total weight of the ceramic coating layer, that is, an amount of the binder based on the total weight of the solid content in the ceramic-containing slurry may be in a range of 10 wt% to 50 wt%, specifically, 10 wt% to 40 wt%.

The PVDF-based binder, for example, may be at least one selected from the group consisting of polyvinylidene fluoride homopolymer, polyvinylidene fluoride-hexafluoropropylene (PVDF-HFP), polyvinylidene fluoride-trichloroethylene (PVDF-TCE), and polyvinylidene fluoride-chlorotrifluoroethylene (PVDF-CTFE). More specifically, a polyvinylidene fluoride homopolymer or polyvinylidene fluoride-hexafluoropropylene copolymer may be used. The binder may have a weight-average molecular weight (Mw) of 500,000 g/mol to 1,500,000 g/mol, specifically, 1,000,000 g/mol to 1,500,000 g/mol, and two or more types having different weight-average molecular weights may be mixed and used. Since adhesion between the porous substrate and the ceramic coating layer is strengthened by using the PVDF-based binder within the above molecular weight range, shrinkage of the porous substrate, which is weak to heat, by heat may be effectively suppressed, and also, since a separator with sufficiently improved electrolyte impregnability may be prepared, there is an advantage in that a battery with efficient electrical output may be produced by using the separator.

The ceramic coating layer may have a thickness of 1 $\mu$m to 10 $\mu$m, preferably, 1 $\mu$m to 5 $\mu$m.

Also, the coating of the first step may be performed through dip coating, die coating, gravure coating, comma coating, or inkjet printing, and a drying process may be performed at a temperature of 25°C to 100°C after the coating.

### (b) Self-Assembled Monolayer (Second Step)

Next, a self-assembled monolayer is formed by impregnating a surface of the ceramic coating layer with a solution containing a trialkoxysilyl ammonium salt, an aminoalkyl trialkoxysilane, or a combination thereof.

In this case, since the self-assembled monolayer includes a Si-O bond, a peak may be observed at 531.8$\pm$1.0 eV when an O 1s orbital of the self-assembled monolayer is analyzed by X-ray photoelectron spectroscopy.

In a case in which the trialkoxysilyl ammonium salt is used in the second step, the self-assembled monolayer may include an $N^+$-C bond, and accordingly, a peak may be observed at 402.6$\pm$1.0 eV when an N 1s orbital of the self-assembled monolayer is analyzed.

Also, in a case in which the aminoalkyl trialkoxysilane is used in the second step, the self-assembled monolayer may include a C-$NH_2$ bond, and accordingly, a peak may be observed at 399.4$\pm$1.0 eV when the N 1s orbital of the self-assembled monolayer is analyzed.

In a case in which a mixture of the trialkoxysilyl ammonium salt and the aminoalkyl trialkoxysilane is used in the second step, both of the above peaks may be observed.

Furthermore, since a contact angle with water also changes as hydrophilicity of the separator changes during the formation of the self-assembled monolayer, formation or non-formation of the self-assembled monolayer may also be confirmed by a method of measuring the contact angle of the separator with water. For example, the contact angle between the separator and water according to an embodiment of the present invention may be 25° or more, particularly 30° to 55°, and more particularly 40° to 50°.

The self-assembled monolayer may include a structure derived from the trialkoxysilyl ammonium salt or the aminoalkyl trialkoxysilane, and may preferably include a structure derived from the trialkoxysilyl ammonium salt. The trialkoxysilyl ammonium salt is more desirable in that it may interact more strongly with the anions of the lithium salt due to higher polarity of a terminal group.

As a preferred example, the self-assembled monolayer may include a compound represented by Formula 1 below.

[Formula 1]

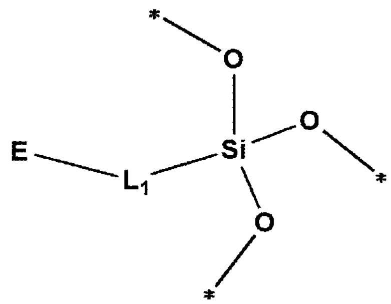

In Formula 1,

* is a portion that is bonded to the compound represented by Formula 1 in the self-assembled monolayer or is bonded to the ceramic coating layer,
E is $-NR_1R_2R_3^+$ or $-NH_2$,
wherein $R_1$ to $R_3$ are each independently hydrogen or an alkyl group, and
$L_1$ is an alkylene group.

The trialkoxysilyl ammonium salt may be represented by Formula 2 below, and may more specifically be N-[3-(trimethoxysilyl)propyl]-N,N,N-trimethylammonium chloride.

[Formula 2]

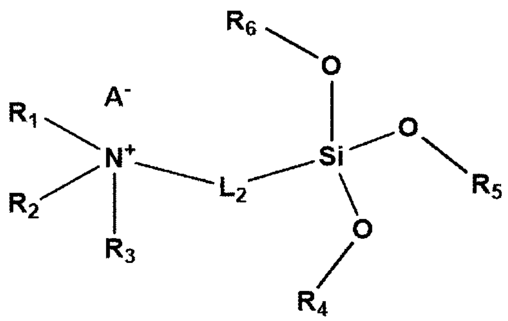

In Formula 2,

$R_1$ to $R_6$ are each independently hydrogen or an alkyl group,
$L_2$ is an alkylene group, and
$A^-$ is a monovalent anion.

Also, in a case in which the self-assembled monolayer includes the structure derived from the aminoalkyl trialkoxysilane, an amino group located at a terminal may be partially positively charged by a dipole moment.

Specifically, the aminoalkyl trialkoxysilane may be represented by Formula 3 below, and may more specifically be 3-aminopropyltrimethoxysilane.

[Formula 3]

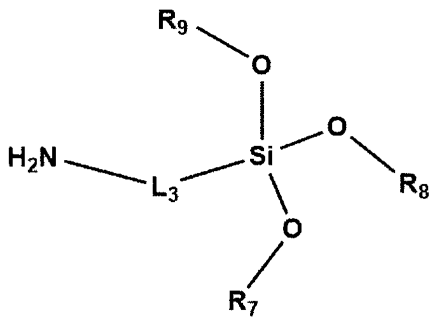

In Formula 3,

$R_7$ to $R_9$ are each independently an alkyl group, and
$L_3$ is an alkylene group.

Formula 1 is the structure derived from the trialkoxysilyl ammonium salt or the aminoalkyl trialkoxysilane, i.e., a structure derived from Formula 2 or 3.

In Formulae 1 and 2, $R_1$ to $R_3$ may each independently be an alkyl group having 1 to 3 carbon atoms, and may preferably each be a methyl group. In Formula 2, $R_4$ to $R_6$ may each independently be an alkyl group having 1 to 3 carbon atoms, and may preferably each be a methyl group.

In Formulae 1 to 3, $L_1$ to $L_3$ may each be an alkylene group having 1 to 10 carbon atoms, preferably an alkylene group having 1 to 5 carbon atoms, and more preferably a propylene group.

In Formula 2, $A^-$ may be $Cl^-$, $Br^-$, $I^-$, $F^-$, or $OH^-$, and may preferably be $Cl^-$.

In Formula 3, $R_7$ to $R_9$ may each independently be an alkyl group having 1 to 3 carbon atoms, and may preferably each be a methyl group.

That is, the self-assembled monolayer may include a structure derived from N-[3-(trimethoxysilyl)propyl]-N,N,N-trimethylammonium chloride or 3-aminopropyltrimethoxysilane.

The separator has a lithium (Li)-ion transference number ($t_{Li+}$) according to Equation 1 of 0.5 or more, preferably 0.6 or more, and more preferably 0.7 or more. However, it may be less than 1.0, specifically, 0.8 or less because anions may not be completely fixed in the electrolyte solution.

[Equation 1]

$$t_{Li+} = \frac{I_{SS}(\Delta V - I_0 R_0)}{I_0(\Delta V - I_{SS} R_{SS})}$$

In Equation 1,

$I_0$ is a current value (unit: A) in an initial state before polarization induction,
$I_{ss}$ is a current value (unit: A) in a steady state,
$R_0$ is an interface resistance value (unit: Q) in the initial state before polarization induction, and
$R_{ss}$ is an interface resistance value (unit: Q) in the steady state.
$\Delta V$ is a voltage value (unit: V) applied to a cell.

Specifically, the Li-ion transference number is measured by a method in which a voltage is applied to a lithium symmetrical cell including the separator between two lithium metal electrodes to induce polarization, and a current is stabilized until the current reaches a steady state, wherein the Li-ion transference number does not represent absolute mobility of lithium ions, but since it is an indicator representing relative mobility between $Li^+$ and the anion, it is suitable for representing performance of the separator in limiting movement of the anions.

A solvent of the solution for forming a monolayer may be alcohol, water, or a combination thereof, and the alcohol may be ethanol or methanol. Preferably, the solvent may be alcohol, more preferably, ethanol. Also, an amount of the trialkoxysilyl ammonium salt or the aminoalkyl trialkoxysilane may be in a range of 0.1 vol% to 1.0 vol%, preferably 0.1 vol%

to 0.5 vol%, and more preferably 0.1 vol% to 0.3 vol% based on a total volume of the solution for forming a monolayer. A self-assembled monolayer capable of achieving the above-described effect may be easily formed when the amount of the trialkoxysilyl ammonium salt or the aminoalkyl trialkoxysilane is 0.1 vol% or more. However, in a case in which the amount of the trialkoxysilyl ammonium salt or the aminoalkyl trialkoxysilane is excessive, since a single-layer monolayer may not be formed but the material may be irregularly stacked, it is desirable that the amount is not greater than 1.0 vol%.

The impregnating of the second step may be performed for 12 hours to 48 hours, preferably, 20 hours to 30 hours, and after the impregnating, a washing process with ethanol at room temperature may be performed, and after the washing, a drying process may be performed at a temperature of 25°C to 40°C. It is desirable that the temperature of the drying process is 40°C or less in order to prevent damage to the separator.

In a case in which a self-assembled monolayer is formed according to the present invention, since the self-assembled monolayer having a thickness of a few nanometers is formed, it does not act as a resistor that impedes the movement of the lithium ions.

## Secondary Battery

Also, a secondary battery according to the present invention includes a positive electrode, a negative electrode, a separator disposed between the positive electrode and the negative electrode, and an electrolyte, and the separator is according to the present invention described above.

The secondary battery of the present invention may be prepared according to a conventional method known in the art, and components excluding the separator, for example, the positive electrode, the negative electrode, and the electrolyte, may be used in the present invention without limitation as long as they are commonly used in a secondary battery, but the following description may be referred to as a preferred example.

The positive electrode may include a positive electrode collector formed of a metal thin plate having excellent conductivity, for example, aluminum foil, and a positive electrode active material layer coated on one surface or both surfaces thereof. The positive electrode active material layer may include a lithium metal oxide including lithium and transition metals, such as cobalt, manganese, and/or nickel, as a positive electrode active material, and may further include a conductive agent and/or a binder, if necessary. Various materials commonly used in the preparation of a secondary battery may be used as the positive electrode active material, the conductive agent, and the binder without limitation.

The negative electrode is preferably lithium metal in consideration of the effect of the above-described separator, but it is not limited to the lithium metal negative electrode because lithium dendrites are a cause of performance degradation regardless of a type of the negative electrode and formation of a strengthened SEI layer is a common goal. That is, the negative electrode may be lithium metal, or may include natural graphite, artificial graphite, $SiO_x$ ($0 \leq x < 2$), or a mixture thereof as a negative electrode active material.

For example, the negative electrode includes a negative electrode collector and a negative electrode active material layer which is provided on the negative electrode collector and includes a negative electrode active material.

The negative electrode collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 μm to 500 μm, and microscopic irregularities may be formed on the surface of the collector to improve adhesion of the negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_x$($0<x<2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used.

Specifically, the negative electrode active material layer may include natural graphite, artificial graphite, $SiO_x$ ($0 \leq x < 2$), or a mixture thereof as the negative electrode active material, and may more specifically include a mixture of artificial graphite and natural graphite. The negative electrode active material may be included in an amount of 80 wt% to 99 wt% based on a total weight of the negative electrode active material layer.

The binder is a component that assists in binding between the conductive agent, the active material, and the

current collector, wherein the binder is commonly added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. Any conductive agent may be used without particular limitation so long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating the negative electrode collector with a negative electrode material mixture, which is prepared by dissolving or dispersing the negative electrode active material as well as optionally the binder and the conductive agent in a solvent, and drying the coated negative electrode collector, or may be prepared by casting the negative electrode material mixture on a separate support and then laminating a film separated from the support on the negative electrode collector.

The lithium metal as the negative electrode may have a thickness of 100 μm to 500 μm, preferably, 200 μm to 400 μm.

Also, since the SEI layer formed on the negative electrode is rich in a LiF component, a strong peak corresponding to Li-F binding energy may appear when a Li 1s orbital of the SEI layer is analyzed by XPS.

As the electrolyte, any electrolyte, in which lithium ions generated by an electrochemical reaction at the electrode during charge and discharge may move, may be used without limitation, and, for example, the electrolyte may be a liquid electrolyte in which a lithium salt is dissolved in an organic solvent.

The lithium salt may be used without particular limitation as long as it is a compound capable of providing lithium ions used in the lithium secondary battery and fluorine ions required for LiF formation. Specifically, the lithium salt may be at least one selected from $LiPF_6$, $LiAsF_6$, $LiBF_4$, $LiSbF_6$, $LiCF_3SO_3$, $LiC_4F_9SO_3$, LiN $(C_2F_5SO_3)_2$, LiN $(C_2F_5SO_2)_2$, and $LiN(CF_3SO_2)_2$. A concentration of the lithium salt may be appropriately changed in a normally usable range, but it is preferable to use the lithium salt within a range of 0.1 M to 5.0 M, preferably, 0.1 M to 3.0 M.

However, when the impregnability of the separator is considered, viscosity of the electrolyte may be in a range of 0.5 cP to 6.0 cP, preferably 2.0 cP to 5.0 cP, and more preferably 3.0 cP to 4.0 cP.

Any organic solvent may be used as the organic solvent without particular limitation so long as it may function as a medium through which ions involved in an electrochemical reaction of the battery may move.

For example, cyclic carbonate-based solvents, such as ethylene carbonate (EC), propylene carbonate (PC), and vinylene carbonate, linear carbonate-based organic solvents, such as dimethyl carbonate (DMC), diethyl carbonate (DEC), dipropyl carbonate, and ethyl methyl carbonate (EMC), or mixed organic solvents thereof may be used.

In the present invention, a battery module including the secondary battery as a unit cell and a battery pack including the battery module are provided. The battery module or the battery pack, for example, may be used as a power source of at least one medium and large sized device of a power tool; a means of transportation such as an electric bicycle, an electric vehicle, and a hybrid electric vehicle (HEV); and a system for power storage.

Hereinafter, the present invention will be described in more detail, according to specific examples.

## [Examples: Preparation of Separators]

### Example 1.

A separator substrate was prepared in which a boehmite-containing coating layer having a thickness of 3 μm was disposed on both surfaces of a polyethylene porous film having a thickness of 11 μm.

A solution for forming a monolayer was prepared by dissolving N-[3-(trimethoxysilyl)propyl]-N,N,N-trimethylammonium chloride in ethanol at a concentration of 0.2 vol%.

The separator substrate was impregnated for 24 hours by being completely immersed in the solution for forming a monolayer, then washed using ethanol at room temperature, and dried at a temperature of 40°C or less to complete a separator in which a self-assembled monolayer was formed on both surfaces of the separator substrate.

### Comparative Example 1.

A polyethylene porous film having a thickness of 11 μm was prepared as a separator.

**Comparative Example 2.**

The separator substrate on which a self-assembled monolayer was not formed in Example 1, that is, the separator substrate used in Example 1 was prepared as a separator.

**Comparative Example 3.**

A separator was prepared in the same manner as in Example 1 except that trichloro(hexyl)silane was used instead of N-[3-(trimethoxysilyl)propyl]-N,N,N-trimethylammonium chloride.

**[Experimental Examples]**

**Experimental Example 1. Confirmation of Formation of Self-Assembled Monolayer**

**(1) XPS Analysis**

Results of analyzing N 1s orbitals of the separators prepared in Example 1, Comparative Example 2, and Comparative Example 3 using X-ray photoelectron spectroscopy are illustrated in FIGS. 3 to 5, respectively. Referring to FIG. 3 which is the result of XPS analysis of Example 1, it may be confirmed that the separator of Example 1 exhibited a peak at 402.6 eV corresponding to $C-N^+$ binding energy. However, in FIGS. 4 and 5 which are the results of XPS analysis of Comparative Examples 2 and 3, it may be confirmed that no peak appeared at the corresponding binding energy. Accordingly, it may be confirmed that a positively charged self-assembled monolayer was formed on the separator of Example 1. Since a peak corresponding to C-N binding energy was caused by a material used as a binder during ceramic coating, it appeared in all of Example 1 and Comparative Examples 2 and 3.

**(2) Contact Angle Measurement**

Contact angles of the separators prepared in Example 1, Comparative Example 2, and Comparative Example 3 with water were measured using a contact angle meter (Drop shape analysis system, DSA100) at 25°C. Specifically, 5 $\mu\ell$ of distilled water was dropped onto a surface of each separator, an angle between the surface of the separator and the water droplet was measured, and the results thereof are illustrated in FIGS. 6 to 8. As illustrated in FIG. 6, the separator of Example 1 had a contact angle of about 46°, the separator of Comparative Example 2 had a contact angle of about 22° as illustrated in FIG. 7, and as illustrated in FIG. 8, the contact angle of the separator of Comparative Example 3 was measured as about 30°. Since a hydroxyl group having high affinity with water, which is adsorbed on the surface of the separator of Example 1 by a hydrolysis reaction while the self-assembled monolayer was formed on the surface, was replaced with Formula 2, the separator of Example 1 had lower hydrophilicity than the separator of Comparative Example 2, and thus, the contact angle was larger.

With respect to Comparative Example 3, since this action did not occur because a positively charged self-assembled monolayer was not formed, it may be confirmed that the contact angle was not significantly increased.

**Experimental Example 2. Separator Performance Evaluation**

**(1) Preparation of Lithium Symmetrical Cell (Li symmetrical cell)**

First, a solution, in which 1 M $LiPF_6$ was dissolved in an organic solvent in which ethylene carbonate (EC):diethyl carbonate (DEC) :dimethyl carbonate (DMC) were mixed in a volume ratio of 1:1:1, was prepared as a liquid electrolyte.

Two 300 $\mu$m thick lithium metal plates were prepared as a negative electrode and a counter electrode, the separator prepared in Example 1 was disposed between the two lithium metal plates, and the liquid electrolyte was then injected to prepare a 2032 coin type lithium symmetrical cell (Li symmetrical cell).

A lithium symmetric cell, in which each of the separators prepared in Comparative Examples 1 to 3 was disposed instead of the separator prepared in Example 1, was also prepared in the same manner.

**(2) Li-ion Transference Number Evaluation**

A voltage of 10 mV was applied to each of the above-prepared lithium symmetric cells at 25°C to induce polarization in the electrode and a current was stabilized until the current reached a steady state. Current and interfacial resistance values before the polarization induction and in the steady state were measured using a potentiometer, and results of calculating Li-ion transference numbers by substituting the values into Equation 1 were as shown in Table 1

below.

[Table 1]

| | ΔV (V) | $I_0$ (A) | $I_{ss}$ (A) | $R_0$ (Ω) | $R_{ss}$ (Ω) | $t_{Li+}$ |
|---|---|---|---|---|---|---|
| Example 1 | 0.01 | 0.0000456 | 0.0000426 | 165 | 160 | 0.726 |
| Comparative Example 1 | 0.01 | 0.0000438 | 0.0000250 | 200 | 300 | 0.283 |
| Comparative Example 2 | 0.01 | 0.0000450 | 0.0000410 | 175 | 140 | 0.454 |
| Comparative Example 3 | 0.01 | 0.0000440 | 0.0000260 | 190 | 290 | 0.394 |

According to the results of Table 1, it may be confirmed that the separator of Example 1 including the positively charged self-assembled monolayer had an effect of decreasing the interfacial resistance and increasing the Li-ion transference number in comparison to the separators of Comparative Examples 1 and 2 which did not include a self-assembled monolayer and the separator of Comparative Example 3 which included a non-positively charged self-assembled monolayer.

**(3) Check Voltage Change**

Each of the lithium symmetric cells prepared in Example 1, Comparative Example 2, and Comparative Example 3 was subjected to lithium electrodeposition/desorption cycles at a charge/discharge capacity of 1 $mAh/cm^2$ and a current density of 1 $mA/cm^2$ at 25°C to obtain voltage profiles as illustrated in FIG. 1.

Lithium electrodeposition/desorption cycles were also performed under conditions of a charge/discharge capacity of 2 $mAh/cm^2$ and a current density of 1 $mA/cm^2$ to obtain voltage profiles as illustrated in FIG. 2.

In general, a point at which the voltage increases is considered as a point at which the negative electrode degrades in the voltage profiles such as those in FIGS. 1 and 2, wherein, referring to FIGS. 1 and 2, it may be confirmed that the voltage of the cell, in which the separator of Example 1 was used, was maintained without a significant change over time, but the voltages of the cells, in which the separators of Comparative Examples 2 and 3 were used, increased rapidly from a certain point.

**(4) SEI Layer Component Analysis**

Each of the lithium symmetrical cells prepared in Example 1, Comparative Example 2, and Comparative Example 3 was charged at a current density of 1 $mA/cm^2$ (2.011 mA) to a capacity of 1 $mAh/cm^2$ (2.011 mAh) under constant current (CC) conditions at 30°C and CC discharged at the same current density and capacity to perform formation of the cell. After the above charging and discharging were set as one cycle and 25 cycles were repeated, the lithium metal electrode was separated from the cell and results of analyzing a Li 1s orbital of an SEI layer formed on the electrode using X-ray photoelectron spectroscopy are illustrated in FIGS. 9 to 11.

When comparing FIG. 9 (Example 1) with FIG. 10 (Comparative Example 2) and FIG. 11 (Comparative Example 3), it may be confirmed that a peak corresponding to binding energy of ROOC, which was a decomposition product of the carbonate-based solvent, and Li (binding energy of ROOC-Li) of the electrode included in the cell of Example 1 was decreased in comparison to those of the electrodes included in the cells of Comparative Examples 2 and 3, but a peak corresponding to Li-F binding energy was significantly increased. Accordingly, it may be confirmed that the electrode of Example 1 included a larger amount of LiF component in the SEI layer than the electrodes of Comparative Examples 2 and 3.

**Claims**

**1.** A separator for a secondary battery, the separator comprising:

a porous substrate;
a ceramic coating layer disposed on at least one surface of both surfaces of the porous substrate; and
a positively charged self-assembled monolayer disposed on the ceramic coating layer.

**2.** The separator for a secondary battery of claim 1, wherein a peak is observed at 531.8±1.0 eV when an O 1s orbital of the self-assembled monolayer is analyzed by X-ray photoelectron spectroscopy.

3. The separator for a secondary battery of claim 1, wherein a peak is observed at 402.6±1.0 eV when an N 1s orbital of the self-assembled monolayer is analyzed by X-ray photoelectron spectroscopy.

4. The separator for a secondary battery of claim 1, wherein the self-assembled monolayer comprises a structure derived from a trialkoxysilyl ammonium salt or an aminoalkyl trialkoxysilane.

5. The separator for a secondary battery of claim 1, wherein the self-assembled monolayer comprises a compound represented by Formula 1:

[Formula 1]

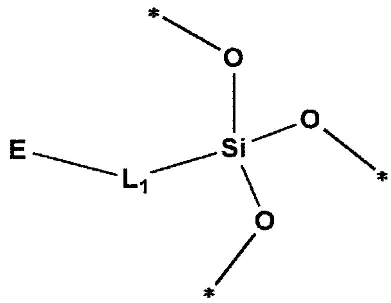

wherein, in Formula 1,
* is a portion that is bonded to the compound represented by Formula 1 in the self-assembled monolayer or is bonded to the ceramic coating layer,
E is $-NR_1R_2R_3^+$ or $-NH_2$,
wherein $R_1$ to $R_3$ are each independently hydrogen or an alkyl group, and
$L_1$ is an alkylene group.

6. The separator for a secondary battery of claim 1, wherein a Li-ion transference number ($t_{Li+}$) according to Equation 1, which is measured by a method in which a voltage is applied to a lithium symmetrical cell including the separator between two lithium metal electrodes to induce polarization, and a current is stabilized until the current reaches a steady state, is 0.5 or more:

[Equation 1]

$$t_{Li+} = \frac{I_{SS}(\Delta V - I_0 R_0)}{I_0(\Delta V - I_{SS} R_{SS})}$$

wherein, in Equation 1,
$I_0$ is a current value (unit: A) in an initial state before polarization induction,
$I_{ss}$ is a current value (unit: A) in the steady state,
$R_0$ is an interface resistance value (unit: Ω) in the initial state before polarization induction,
$R_{ss}$ is an interface resistance value (unit: Ω) in the steady state, and
ΔV is a voltage value (unit: V) applied to the cell.

7. The separator for a secondary battery of claim 1, wherein the ceramic coating layer comprises at least one ceramic selected from the group consisting of aluminum oxide ($Al_2O_3$), boehmite, cerium oxide ($CeO_2$), calcium carbonate ($CaCO_3$), barium carbonate ($BaCO_3$), magnesium oxide (MgO), magnesium hydroxide ($Mg(OH)_2$), aluminum hydroxide ($Al(OH)_3$), clay, silica ($SiO_2$), zirconia ($ZrO_2$), titanium dioxide ($TiO_2$), and zinc oxide (ZnO).

8. A method of preparing a separator for a secondary battery, the method comprising:

a first step of preparing a separator substrate including a ceramic coating layer on at least one surface of both surfaces of a porous substrate; and

a second step of forming a self-assembled monolayer by impregnating a surface of the ceramic coating layer with a solution for forming a monolayer which contains a trialkoxysilyl ammonium salt, an aminoalkyl trialkoxysilane, or a combination thereof.

**9.** The method of claim 8, wherein the trialkoxysilyl ammonium salt is represented by Formula 2:

[Formula 2]

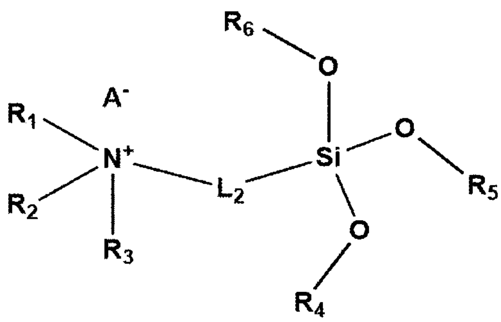

wherein, in Formula 2,
$R_1$ to $R_6$ are each independently hydrogen or an alkyl group,
$L_2$ is an alkylene group, and
$A^-$ is a monovalent anion.

**10.** The method of claim 8, wherein the aminoalkyl trialkoxysilane is represented by Formula 3:

[Formula 3]

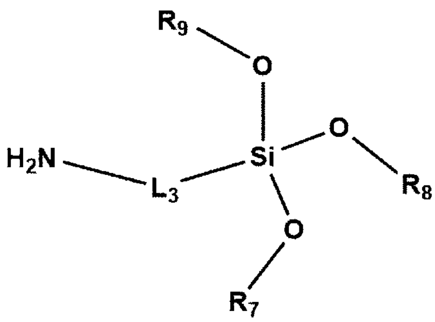

wherein, in Formula 3,
$R_7$ to $R_9$ are each independently an alkyl group, and
$L_3$ is an alkylene group.

**11.** The method of claim 8, wherein a solvent of the solution for forming a monolayer is alcohol, water, or a combination thereof.

**12.** The method of claim 8, wherein an amount of the trialkoxysilyl ammonium salt or the aminoalkyl trialkoxysilane is in a range of 0.1 vol% to 1.0 vol% based on a total volume of the solution for forming a monolayer.

**13.** The method of claim 8, wherein the impregnating of the second step is performed for 12 hours to 48 hours.

**14.** A secondary battery comprising a positive electrode; a negative electrode; the separator of claim 1 which is disposed between the positive electrode and the negative electrode; and an electrolyte.

**15.** The secondary battery of claim 14, wherein the negative electrode is lithium metal, or comprises natural graphite, artificial graphite, $SiO_x$ ($0 \leq x < 2$), or a mixture thereof as a negative electrode active material.

[FIG. 1]

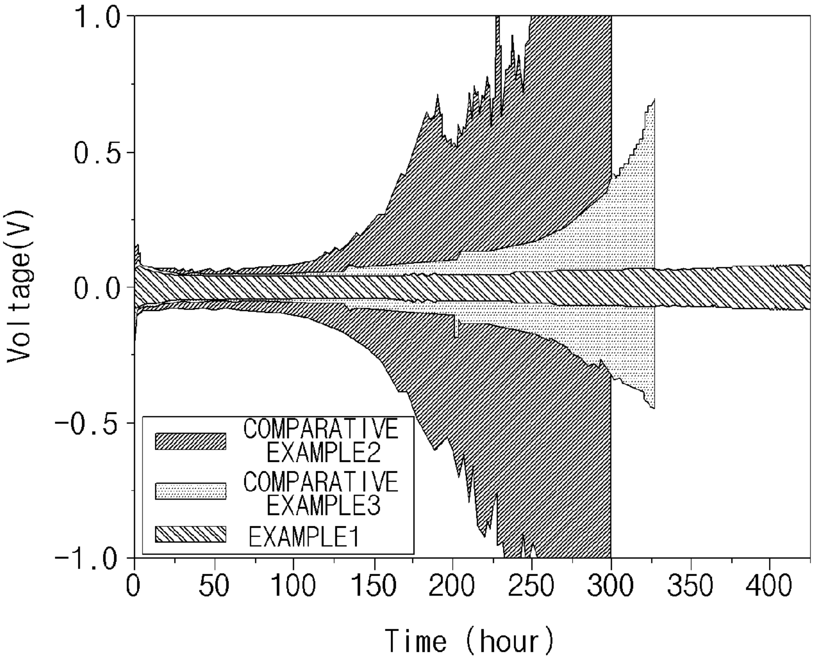
1.0
0.5
0.0
-0.5
-1.0
Voltage(V)
0
50
100
150
200
250
300
350
400
Time (hour)
COMPARATIVE EXAMPLE2
COMPARATIVE EXAMPLE3
EXAMPLE1

[FIG. 2]

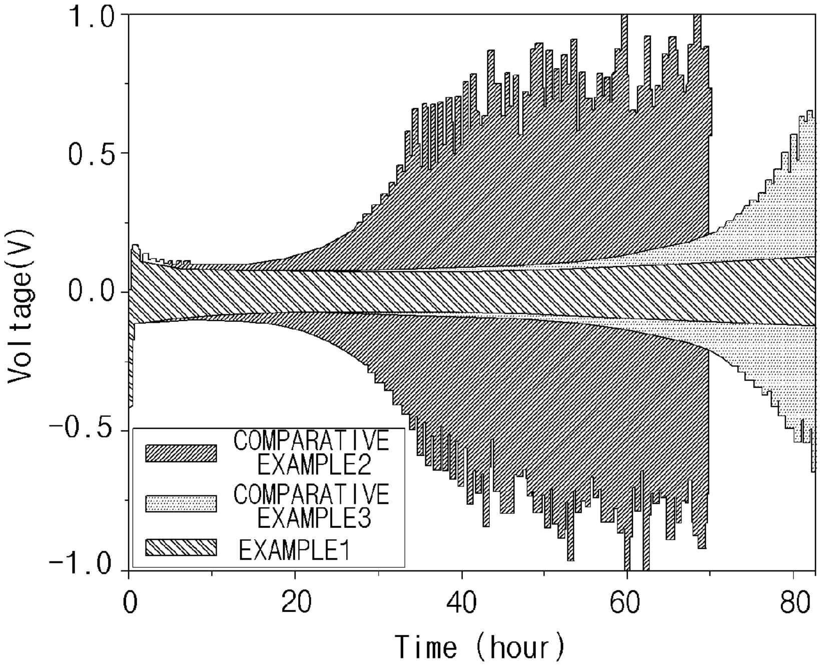
1.0
0.5
0.0
-0.5
-1.0
Voltage(V)
0
20
40
60
80
Time (hour)
COMPARATIVE EXAMPLE2
COMPARATIVE EXAMPLE3
EXAMPLE1

[FIG. 3]

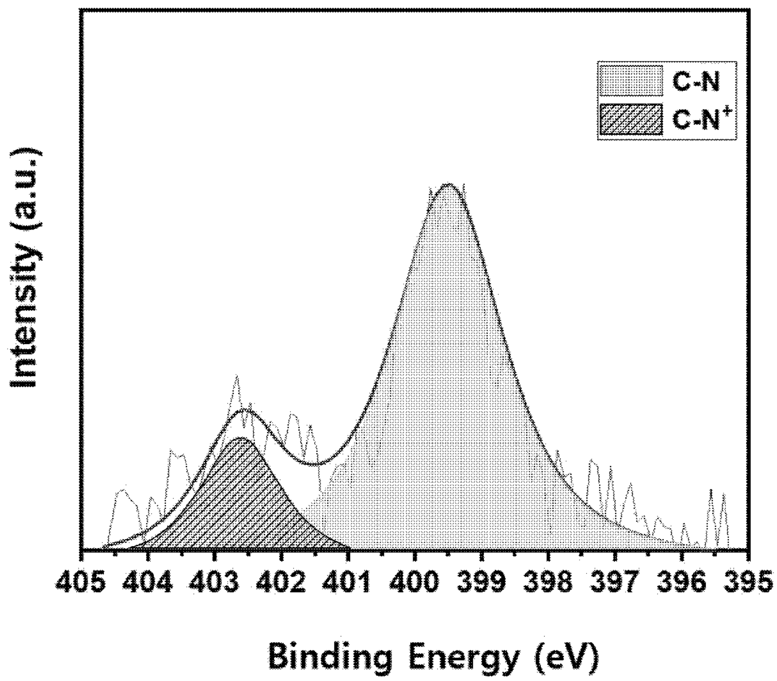
C-N
C-N+
Intensity (a.u.)
405 404 403 402 401 400 399 398 397 396 395
Binding Energy (eV)

[FIG. 4]

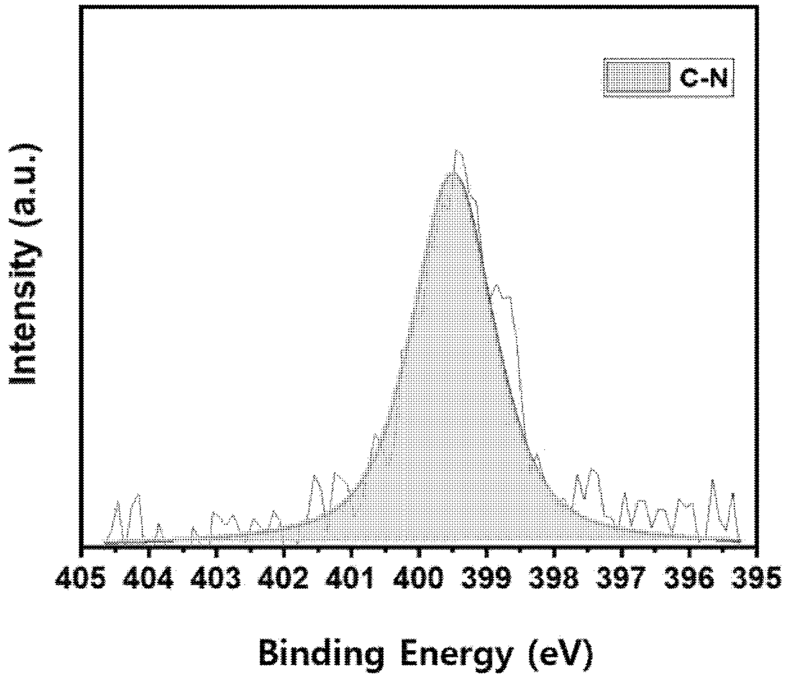
C-N
Intensity (a.u.)
405 404 403 402 401 400 399 398 397 396 395
Binding Energy (eV)

[FIG. 5]

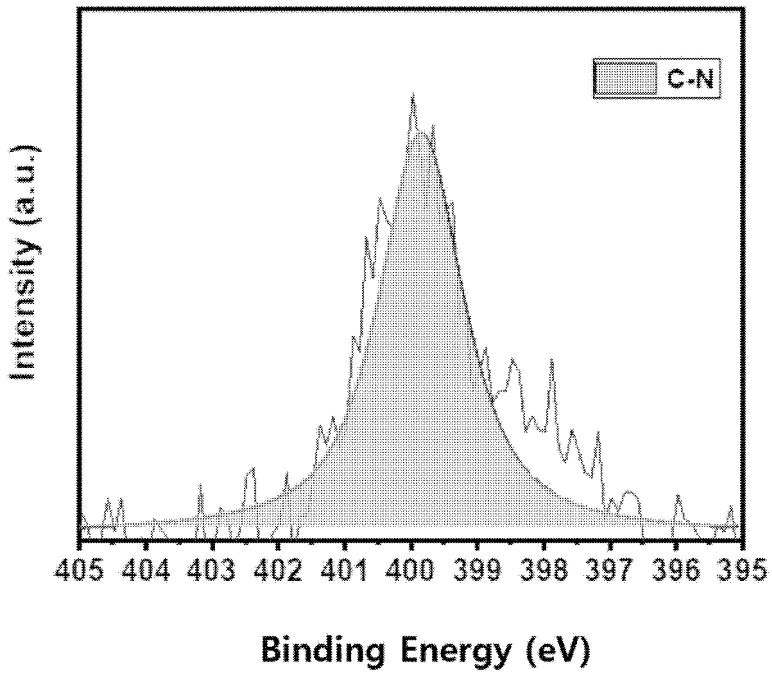
C-N
Intensity (a.u.)
405 404 403 402 401 400 399 398 397 396 395
Binding Energy (eV)

[FIG. 6]

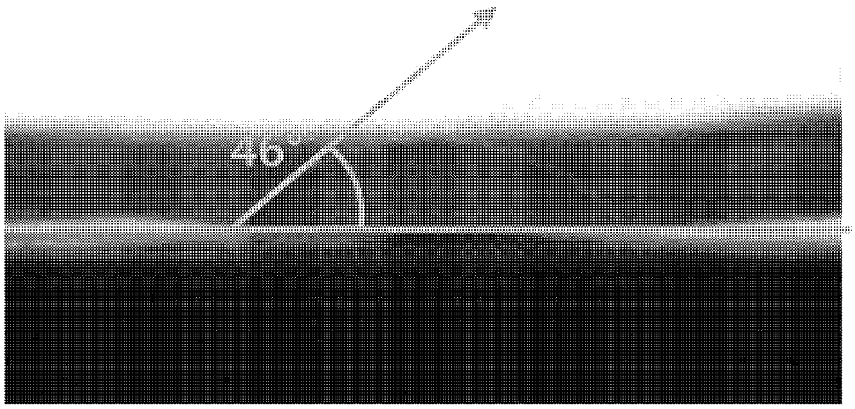

[FIG. 7]

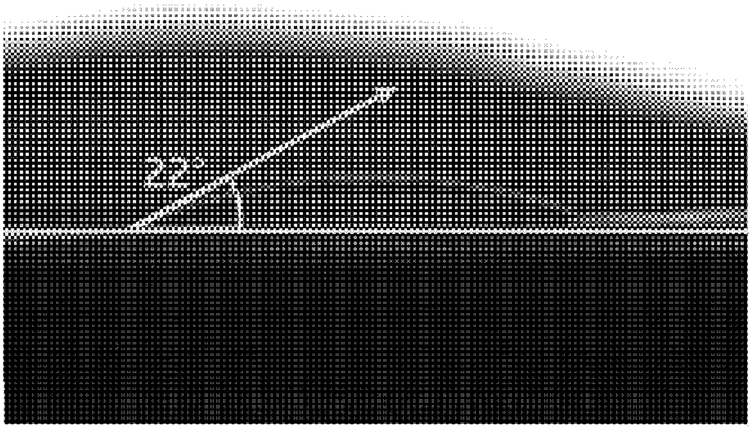


[FIG. 8]

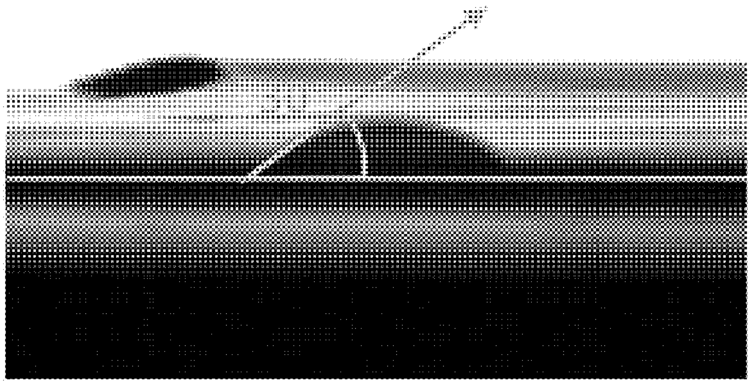

[FIG. 9]

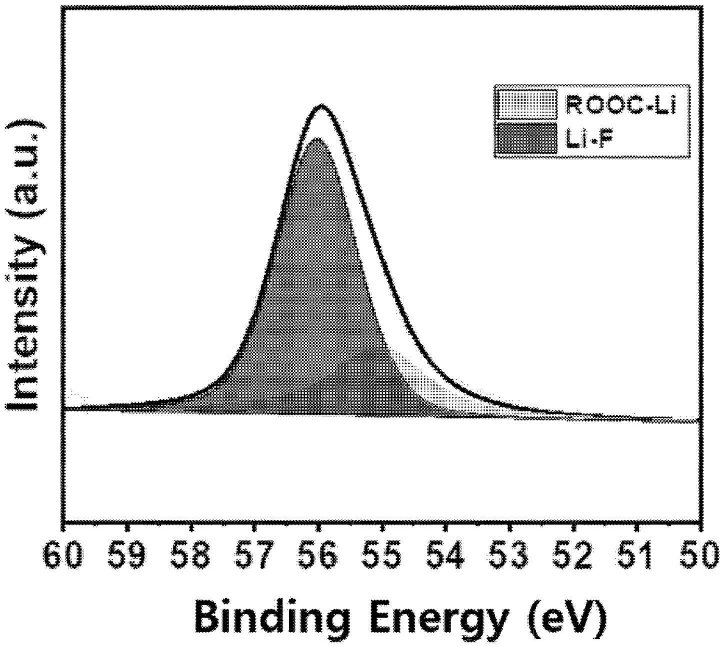
ROOC-Li
Li-F
Intensity (a.u.)
60 59 58 57 56 55 54 53 52 51 50
Binding Energy (eV)

[FIG. 10]

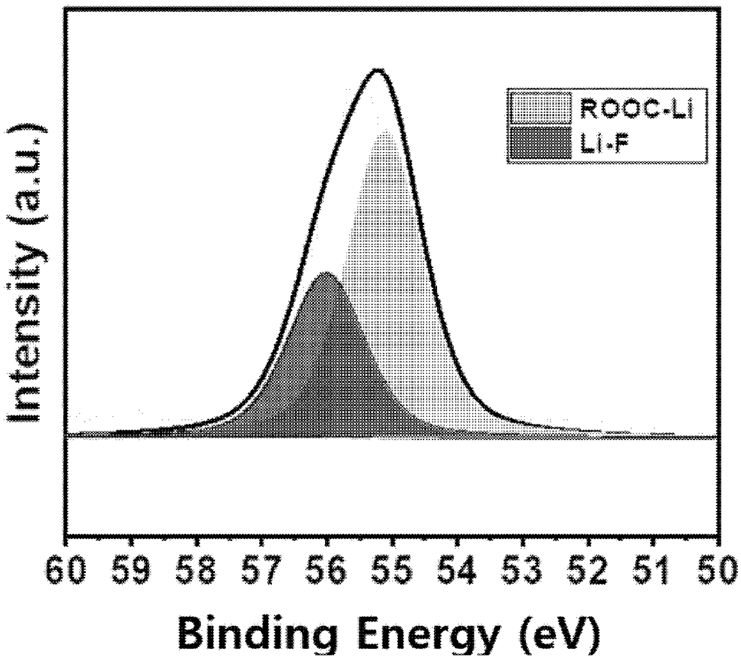
ROOC-Li
Li-F
Intensity (a.u.)
60 59 58 57 56 55 54 53 52 51 50
Binding Energy (eV)

[FIG. 11]

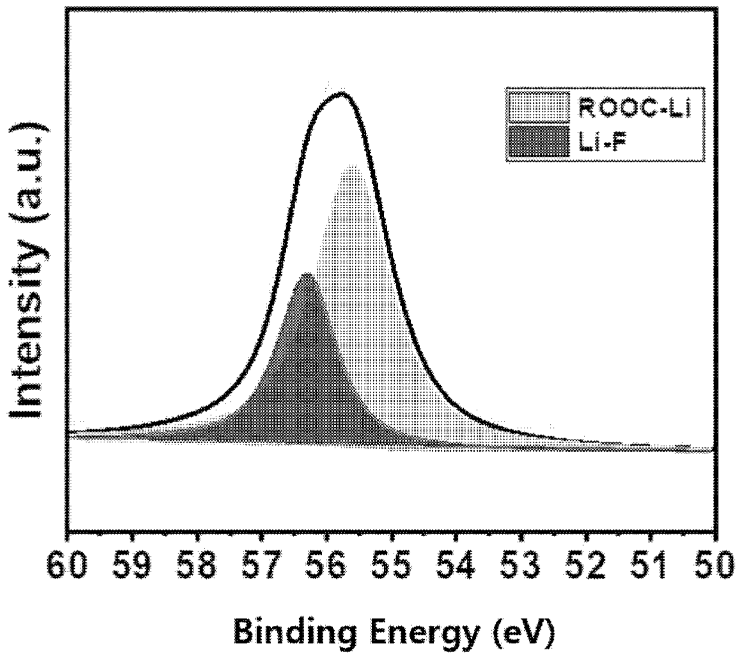
ROOC-Li
Li-F
Intensity (a.u.)
60 59 58 57 56 55 54 53 52 51 50
Binding Energy (eV)

## INTERNATIONAL SEARCH REPORT

International application No.
**PCT/KR2024/020909**

**A. CLASSIFICATION OF SUBJECT MATTER**

**H01M 50/451**(2021.01)i; **H01M 50/457**(2021.01)i; **H01M 50/434**(2021.01)i; **H01M 50/414**(2021.01)i; **H01M 50/403**(2021.01)i; **H01M 10/052**(2010.01)i; **H01M 4/583**(2010.01)i; **H01M 4/38**(2006.01)i; **H01M 4/48**(2010.01)i

According to International Patent Classification (IPC) or to both national classification and IPC

**B. FIELDS SEARCHED**

Minimum documentation searched (classification system followed by classification symbols)

H01M 50/451(2021.01); H01M 10/052(2010.01); H01M 50/40(2021.01); H01M 50/403(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 이차전지(secondary battery), 분리막(separator), 세라믹 코팅층(ceramic coating layer), 양전하(positive charge), 자기조립 단분자막(self-assembled monolayer, SAM)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0108144 A (SAMSUNG SDI CO., LTD.) 17 September 2020 (2020-09-17)<br>See claims 1-20; and paragraph [0037]. | 1-15 |
| A | LIU, Y. et al. Self-assembled monolayers direct a LiF-rich interphase toward long-life lithium metal batteries. Science. 2022, vol. 375, pp. 739-745.<br>See abstract; page 3; and figure 1. | 1-15 |
| A | KR 10-2023-0141215 A (POSTECH RESEARCH AND BUSINESS DEVELOPMENT FOUNDATION et al.) 10 October 2023 (2023-10-10)<br>See claims 1, 3, 12 and 14. | 1-15 |
| A | KR 10-2021-0114285 A (SAMSUNG SDI CO., LTD.) 23 September 2021 (2021-09-23)<br>See claims 1 and 4. | 1-15 |
| A | KR 10-2013-0105334 A (SAMSUNG SDI CO., LTD.) 25 September 2013 (2013-09-25)<br>See claims 1 and 4. | 1-15 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/020909**

| Patent document cited in search report | | Publication date (day/month/year) | Patent family member(s) | | | Publication date (day/month/year) |
|---|---|---|---|---|---|---|
| KR 10-2020-0108144 | A | 17 September 2020 | KR | 10-2317502 | B1 | 27 October 2021 |
| | | | US | 12183947 | B2 | 31 December 2024 |
| | | | US | 2022-0190440 | A1 | 16 June 2022 |
| | | | WO | 2020-179998 | A1 | 10 September 2020 |
| KR 10-2023-0141215 | A | 10 October 2023 | KR | 10-2735344 | B1 | 29 November 2024 |
| KR 10-2021-0114285 | A | 23 September 2021 | CN | 113372772 | A | 10 September 2021 |
| | | | KR | 10-2580238 | B1 | 19 September 2023 |
| | | | US | 12062809 | B2 | 13 August 2024 |
| | | | US | 2021-0288383 | A1 | 16 September 2021 |
| | | | US | 2024-0356159 | A1 | 24 October 2024 |
| KR 10-2013-0105334 | A | 25 September 2013 | CN | 103311483 | A | 18 September 2013 |
| | | | CN | 103311483 | B | 01 August 2017 |
| | | | EP | 2639854 | A1 | 18 September 2013 |
| | | | EP | 2639854 | B1 | 06 May 2020 |
| | | | JP | 2013-197100 | A | 30 September 2013 |
| | | | JP | 6282401 | B2 | 21 February 2018 |
| | | | KR | 10-1865171 | B1 | 07 June 2018 |
| | | | US | 2013-0244080 | A1 | 19 September 2013 |

Form PCT/ISA/210 (patent family annex) (July 2022)